# EUROPEAN PATENT APPLICATION

(11) **EP 1 698 259 A1**
(43) Date of publication of application: **06.09.2006**
(21) Application number: 06380044.5
(22) Date of filing: 02.03.2006
(51) Int. Cl.: A47G 1/06, C03C 17/34, B32B 17/10

(54) **Protective panel for framed illustrations**

(30) Priority: 03.03.2005 ES 200500543 U
(71) Applicant: Caro Molero, Angel, 08520 Les Franqueses del Vallés, Barcelona (ES)
(72) Inventor: Caro Molero, Angel, 08520 Les Franqueses del Vallés, Barcelona (ES)
(74) Representative: Toro Gordillo, Ignacio Maria

(57) **Abstract**

A protective panel for framed illustrations, said panel being of the type intended to be positioned within a frame, forming a front surface, and optionally a back surface, for protecting the framed illustration, comprising a transparent glass plate characterized in that it comprises a flexible, transparent and self-adhesive sheet applied on one of the sides of the glass plate.

## Description

### Object of the Invention

The present invention relates to a protective panel for framed illustrations, said panel being of the type intended to be positioned within a frame, forming a front surface, and optionally a back surface, for protecting the framed illustration.

### Background of the invention

For showing and displaying illustrations, such as canvases, photographs, lithographs, etc., framing means are currently used which comprise a transparent front panel, usually consisting of glass forming the front of the frame, a transparent or opaque back panel, and a surrounding frame covering the edges of the front and back panels and of the illustration to be framed, located between both panels.

It is necessary for the front glass plate to be as transparent as possible so as to allow viewing the inner illustration as correctly and accurately as possible. However, conventional glasses may have reflections or glares interfering in viewing the image. Furthermore, the thickness of this glass markedly contributes to the weight of the framed picture. For the purpose of minimizing these effects, a special glass plate of the type called Velglas is often used, which has an antiglare surface treatment minimizing said glares.

This glass plate must be as thin as possible for the purpose of lightening the weight and furthermore minimizing eventual optical drawbacks. However, such a thin plate has the problem that it can very easily break, its remains causing a plurality of very dangerous shards and fragments with sharp edges.

### Description of the Invention

The protective panel for framing illustrations of the present invention, being of those comprising a glass plate, has the particularity of incorporating an element which increases the safety of the framing and the personal safety of the user should the glass or glasses forming it be impacted or break.

According to the invention, the protective panel comprises a flexible, transparent and self-adhesive sheet fixed on one of the sides for the glass plate. Said flexible, transparent and self-adhesive sheet is of a plastic material.

Preferably, when the framing of a canvas or the like is carried out, the protective panel will be arranged such that the plastic sheet, fixed to the glass plate, will be opposite the canvas or illustration to be framed.

This flexible sheet provides greater safety, since if the glass plate breaks, the fragments remain adhered and attached to the flexible sheet. It thus prevents the fragments from falling to the ground and from being able to damage the displayed canvas or illustration.

This protective panel can be used both for protecting the front surface and the back surface of the illustration to be framed.

### Description of the Figures

To complement the description being made and for the purpose of aiding to understand the features of the invention, a set of drawings is attached to the present specification in which the following is shown with an illustrative and nonlimiting character:
Figure 1 shows a perspective view of an embodiment of the protective panel of the invention consisting of a glass plate of the Velglas type with a flexible, self-adhesive sheet applied on one of its sides, one of the corners of the flexible sheet having been peeled off to facilitate its observation.
Figure 2 shows a perspective view of the protective panel applied in a frame.
Figure 3 shows an exploded perspective view of two protective panels, opposite to the front and back sides of the illustration to be framed.
Figure 4 shows a view similar to the previous one, in which the back protective panel has been replaced with a rigid support plate made of wood, cardboard or the like.

### Preferred Embodiment of the Invention

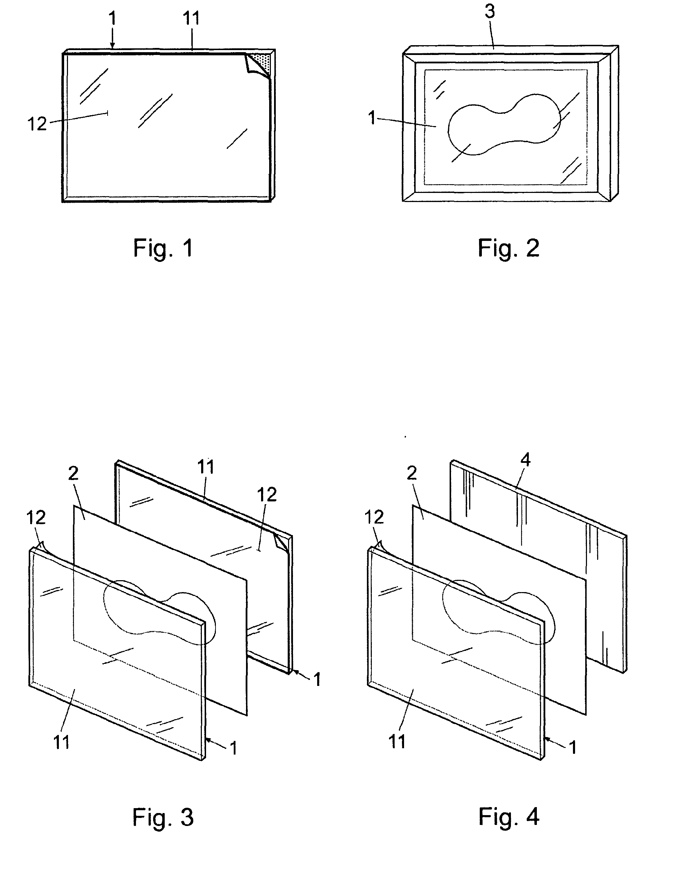

As can be observed in Figure 1, the protective panel (1) object of the invention comprises a thin glass plate (11) of the type called Velglas, and a flexible, transparent and self-adhesive sheet (12) fixed on one of the surfaces of the glass plate (1).

Said protective panel (1) is applicable in the framing of illustrations (2) by means of a perimetral frame (3), as shown in Figure 2.

Said protective panel (1) can be used to protect both the front and back surfaces of the illustration (2) to be framed, as shown in Figure 3, or only to protect the front of the illustration (2) to be framed, as shown in Figure 4, in this case protecting the back surface of the illustration (2) with a conventional rigid panel (4) made of wood, cardboard or the like.

In any case, it has been provided that the flexible sheet (12) of the protective panel is opposite to the illustration (2) to be framed.

Having sufficiently described the nature of the invention as well as a preferred embodiment thereof, it is stated for all intents and purposes that the materials, shape, size and arrangement of the described elements may be modified, provided that this does not imply an alteration of the essential features of the invention claimed below.

## Claims

1. A protective panel for framed illustrations, of the type comprising a transparent glass plate of the type called Velglas, **characterized in that** it comprises a flexible, transparent and self-adhesive sheet applied on one of the sides of the glass plate.

2. A protective panel according to claim 1,
**characterized in that** the flexible, transparent and self-adhesive sheet is made of a plastic material.
